# EUROPÄISCHE PATENTSCHRIFT

(11) **EP 1 690 713 B1**
(45) Veröffentlichungstag und Bekanntmachung des Hinweises auf die Patenterteilung: **25.02.2009**
(21) Anmeldenummer: 05025620.5
(22) Anmeldetag: 24.11.2005
(51) Int. Cl.: B60J 5/06, E05F 15/14, E05D 15/10

(54) **Ausstellschiebetürsystem für ein Fahrzeug**
System for sliding plug door for a vehicle
Système pour porte coulissante de véhicule

(30) Priorität: 09.02.2005 DE 102005005802
(43) Veröffentlichungstag der Anmeldung: 16.08.2006
(73) Patentinhaber: Hübner GmbH, 34123 Kassel (DE)
(72) Erfinder: Persson, Martin, 24292 Horby (SE); Hammer, Anders, 27922 Köpingebro (SE)
(74) Vertreter: Walther, Walther & Hinz GbR

(56) Entgegenhaltungen:
- EP-A- 0 643 190
- EP-A- 1 488 977
- DE-A1- 19 735 181
- US-A- 3 414 040

## Beschreibung

Die vorliegende Erfindung betrifft ein Ausstellschiebetürsystem für ein Fahrzeug, z. B. einen Bus oder ein Schienenfahrzeug, umfassend mindestens einen Türflügel, wobei der mindestens eine Türflügel im geschlossenen Zustand außenhautbündig in der Türöffnung einsitzt und wobei sich der eine Türflügel in Offenstellung außenseitig vor der Fahrzeugwandung befindet und in dieser Stellung die Türöffnung freigibt, wobei der mindestens eine Türflügel an einem Schlitten angeordnet ist, wobei der Schlitten Längsführungsmittel für den mindestens einen Türflügel aufweist und wobei der Schlitten in der Türöffnung im Kopfbereich durch eine Montageplatte quer zur Fahrzeuglängsachse verschieblich aufnehmbar ist, wobei sowohl zum Antrieb des mindestens einen Türflügels als auch zur Verschiebung des Schlittens quer zur Fahrzeuglängsachse ein Antrieb vorgesehen ist, wobei der Antrieb einen Motor und einen vom Motor angetriebenen Ketten- oder Riementrieb umfasst.

Aus der DE 19735 181 A1 ist eine Schwenkschiebetür für ein Fahrzeug bekannt, wobei mittels eines Antriebs mit einen Planetengetriebe sowohl die Ausstellbewegung als auch die Schiebebewegung der Türflügel relativ zur Fahrzeugwand erfolgt. Im Einzelnen ist eine von dem Planetengetriebe angetriebene Kurbelscheibe vorgesehen, die über einen Hebel einen Schwenkhebel antreibt, der den Türflügel an der Nebenschließkante ausstellt. Parallel dazu wird durch einen weiteren Steuerhebel, der ebenfalls durch die Kurbelscheibe angetrieben wird, die Tür an der Hauptschließkante ausgestellt. Ist der Türflügel frei, wird er durch den Riementrieb verschoben.

Schiebetüren der eingangs genannten Art sind aus dem Stand der Technik hinreichend bekannt. So ist beispielsweise aus der EP 0 517 334 ein Schwenkschiebetürsystem für Fahrzeuge bekannt, bei dem an einer Montageplatte, die im Kopfbereich der Türöffnung angebracht ist, ein quer zur Fahrzeuglängsachse beweglicher Schlitten vorgesehen ist, wobei der Schlitten einen Türflügel aufnimmt. Sowohl zur Bewegung des Schlittens als auch zur Bewegung der Türflügel parallel zur Längsachse des Wagenkastens ist ein Antrieb vorgesehen, der mit dem Schlitten bzw. den Türflügeln verbunden ist, der aber ansonsten ortsfest an der Montageplatte befestigt ist. Das heißt, dass bei dieser Schwenkschiebetür der Antrieb nicht mit dem Schlitten ausfährt.

Ganz anders stellt sich das Schwenkschiebetürsystem für ein Fahrzeug gemäß der EP 0 820 889 dar. Dort ist ein mit einer Montageplatte gleichzusetzender Rahmen vorgesehen, der im Montagezustand fest mit dem Fahrzeug verbunden ist. Dieser Montagerahmen nimmt den quer zur Fahrzeuglängsachse beweglichen Schlitten auf, wobei der Antriebsmotor für die Türflügelbewegung einen Teil dieses Schlittens bildet.

Aus der WO 02/42105 ist nun eine Ausstellschiebetür bekannt, bei der ein Schlitten vorgesehen ist, der im Kopfbereich an der Türöffnung quer zur Fahrzeuglängsachse verschieblich ist, um die Türflügel, die an dem Schlitten angeordnet sind, vor die Fahrzeugwandung zu stellen. Nach Abschluss der Querbewegung erfolgt das Verschieben des Türflügels parallel zur Längsachse des Fahrzeugs, wobei die Türöffnung freigegeben wird. Hierbei ist vorgesehen, dass der Antrieb Bestandteil des Schlittens ist. Dieser auf dem Schlitten angeordnete Antrieb besorgt zum einen die Bewegung des Schlittens und zum anderen die Öffnungsbewegung der Türflügel parallel zur Längsachse des Fahrzeugs. Dies geschieht im Einzelnen dadurch, dass die Reaktionskraft des Antriebs für die Längsbewegung der Türflügel während der Ausstellbewegung des Schlittens benutzt wird, um den Schlitten auszustellen. Bei diesen bekannten Ausstellschiebetürsystemen ist - wie bereits ausgeführt - der Antrieb auf dem Schlitten angeordnet. Dies bedingt eine nicht unerhebliche Bauhöhe.

Aus der EP 1 488 977 A1 ist ein Ausstellschiebetürsystem der eingangs genannten Art bekannt. Bei diesem Ausstellschiebetürsystem bewirkt der Antrieb, der beweglich auf der Montageplatte angeordnet ist, sowohl die Ausstellbewegung des Schlittens als auch die Längsverschiebung des mindestens einen Türflügels parallel zur Fahrzeugwandung, nachdem die Ausstellbewegung erfolgt ist. Im Einzelnen ist während der Ausstellbewegung des Schlittens der Antrieb relativ zum Riementrieb verschieblich, und zwar quer zur Ausstellbewegung des Schlittens verschieblich auf der Montageplatte angeordnet, was wiederum bedeutet, dass der Riementrieb fest auf der Montageplatte angeordnet ist.

Da für die Ausstellbewegung des Schlittens quer zur Fahrzeuglängsachse von dem Antriebsmotor ein höheres Moment abverlangt wird als bei der Verschiebung des mindestens einen Türflügels parallel zur Fahrzeuglängsachse, ist beim Stand der Technik vorgesehen, dass durch eine entsprechende elektronische oder elektrische Regelung des Antriebsmotors dieser während der Ausstellbewegung des Schlittens bei höherem Moment langsamer läuft als bei der Verschiebung des mindestens einen Türflügels. Diese beschriebene Art der Regelung des Antriebsmotors ist relativ aufwendig und auch teuer, und - wie sich im Laufe der Zeit gezeigt hat - auch störanfällig.

Der Erfindung liegt daher die Aufgabe zu Grunde, ein Ausstellschiebetürsystem der eingangs genannten Art bereitzustellen, mit dem auf einfache und preiswerte Art und Weise eine langsame Ausstellbewegung des Schlittens bei vergleichsweise hohem Drehmoment und eine schnelle Verschiebung des mindestens einen Türflügels bei vergleichsweise geringerem Drehmoment verwirklicht werden kann.

Die Aufgabe wird erfindungsgemäß dadurch gelöst, dass der Riemen- oder Kettentrieb eine Übersetzung nach Art eines Flaschenzuges aufweist, wobei die Übersetzung derart ausgebildet ist, dass während der Ausstellbewegung des Schlittens die Ausstellbewegung langsam aber bei hohem Moment erfolgt, wobei nach Abschluss der Ausstellbewegung die seitliche Bewegung des mindestens einen Türflügels schneller erfolgt als die Ausstellbewegung, jedoch bei geringerem Moment. Hieraus wird deutlich, dass durch die Übersetzung trotz gleichbleibender Motordrehzahl die Geschwindigkeit des Schlittens während der Ausstellbewegung vergleichsweise geringer ist als die Bewegung der Türflügel während der seitlichen Verschiebung zur Freigabe der Türöffnung. Durch die Übersetzung wird darüber hinaus erreicht, dass während der Ausstellbewegung des Schlittens das Moment vergleichsweise höher ist als bei Verschiebung des mindestens einen Türflügels.

Weitere vorteilhafte Merkmale zu der Erfindung sind den Unteransprüchen zu entnehmen.

Im Einzelnen ist insofern vorgesehen, dass die Übersetzung einen am Schlitten angeordneten, sich parallel zur Richtung der Ausstellbewegung des Schlittens erstreckenden Arm mit endseitiger Druckrolle für den Riemen- oder Kettentrieb aufweist. Da sich somit der Arm parallel zur Ausstellbewegung des Schlittens erstreckt und die Druckrolle durch den Arm durch eine senkrechte Achse gehalten wird, bedeutet dies, dass der Ketten- oder Riementrieb nicht horizontal verläuft, wie dies beim Stand der Technik gemäß der EP 1 488 977 A1 der Fall ist, sondern senkrecht zur Erstreckung des Arms. Hieraus wird deutlich, dass die den Arm aufweisende Übersetzung parallel zur Ausstellbewegung des Schlittens verläuft. Bereits zuvor ist erwähnt worden, dass die Übersetzung nach Art eines Flaschenzuges wirkt, was bedeutet, dass die Druckrolle zur Umlenkung des Riemen- oder Kettentriebes die eine Umlenkung eines Flaschenzuges darstellt.

Im Einzelnen ist im Bereich des Arms zu beiden Seiten des Arms jeweils mindestens eine erste und zweite Führungsrolle für den Riemen- oder Kettentrieb angeordnet, um den Riemen oder die Kette des Riemen- oder Kettentriebs in Richtung der Druckrolle zu führen. Des Weiteren ist vorgesehen, dass die erste Führungsrolle, die zu dem Antrieb benachbart liegt, auf der Montageplatte angeordnet ist, was bedeutet, dass bei der Ausstellbewegung des Schlittens die an dem Arm befestigte Druckrolle sich relativ zu der ersten Führungsrolle verschiebt. Die zweite Führungsrolle hingegen, die am Arm befestigt ist, fährt mit dem Arm bei der Ausstellbewegung des Schlittens heraus.

Der Schlitten weist zu beiden Enden jeweils eine Spannrolle für den Riemen- oder Kettentrieb auf. Das heißt, dass der Riementrieb zumindest partiell bei der Ausstellbewegung des Schlittens mit ausgestellt wird. Nun ist aber zwischen der ersten Spannrolle und dem Antrieb für den Riemen-oder Kettentrieb eine Umlenkrolle vorgesehen, wobei die Umlenkrolle auf der Montageplatte angeordnet ist. Das heißt, dass insofern ein weiterer Teil des Riemen- oder Kettentriebes ortsfest auf der Montageplatte verbleibt, das heißt nicht mit dem Schlitten ausfährt.

Der Antrieb, der ein von einem Motor angetriebenes Ritzel umfasst, weist zum Anpressen des Riemens oder der Kette an das Ritzel eine Andruckrolle auf. Dies deshalb, um einen im Wesentlichen schlupffreien Betrieb zu ermöglichen.

Wie bereits an anderer Stelle erläutert, basiert das Prinzip des Ausstellschiebetürsystems darauf, dass mittels eines Antriebes sowohl die Ausstellbewegung des Schlittens erfolgt als auch die Verschiebebewegung des mindestens einen, vorzugsweise jedoch der beiden Türflügel zur Freigabe der Türöffnung. Der Schlitten ist mit der Montageplatte durch zwei parallel zueinander verlaufende Schienen geführt, die nach Art einer Schwalbenschwanzführung ausgebildet sind. Das heißt, die Schienen halten den Schlitten verschieblich an der Montageplatte.

Zur Führung des Schlittens während der Ausstellbewegung ist nun mindestens eine Kulisse vorgesehen, die auf der Montageplatte angeordnet ist, wobei der Schlitten ein Führungsglied zur Führung durch die Kulisse besitzt. Die Kulisse ist auf der Montageplatte quer zur Richtung der Ausstellbewegung des Schlittens verschieblich angeordnet, wobei die Kulisse zur Führung des Führungsgliedes des Schlittens einen schrägverlaufenden Schlitz aufweist. In Verbindung mit der Tatsache, dass die Kulisse während der Ausstellbewegung des Schlittens in Richtung der Längsachse des Fahrzeugs auf der Montageplatte verschieblich ist, ergibt sich, dass der Schlitten genau senkrecht zur Längsachse des Fahrzeugs ausfährt. In diesem Zusammenhang ist des Weiteren vorgesehen, dass der Schlitz der Kulisse endseitig einen sich parallel zur Längsachse des Fahrzeugs erstreckenden Fuß aufweist, wobei im eingefahrenen Zustand des Schlittens das Führungsglied endseitig im Fuß anliegt. Hierdurch wird erreicht, dass bei stillstehendem Antrieb der Schlitten eine Verriegelungsstellung einnimmt.

Wie bereits an anderer Stelle erläutert, ist die Kulissenführung auf der Montageplatte verschieblich angeordnet. Dies wird im Einzelnen dadurch bewerkstelligt, dass auf der Montageplatte parallel zur Längsachse des Fahrzeugs eine Schiene vorgesehen ist, auf der die Kulisse verschieblich gelagert ist. Wie bereits ebenfalls erwähnt, ist der Antrieb verschieblich, und zwar in Richtung der Fahrzeuglängsachse, was konstruktiv dadurch bewerkstelligt wird, dass der Antriebsmotor an der Kulisse, das heißt schlussendlich auf der Schiene befestigt ist, die auch die Kulisse längsverschieblich aufnimmt.

Der Riemen- oder Kettentrieb besitzt darüber hinaus mindestens einen, vorzugsweise jedoch zwei Mitnehmer, wobei ein jeder Mitnehmer mit jeweils einem Türflügel in Verbindung steht, das heißt, dass bei Bewegung des Riemen- oder Kettentriebes bei ausgestelltem Schlitten durch die Mitnehmer die Türflügel seitlich verfahren werden.

Nach einem weiteren besonderen Merkmal der Erfindung ist vorgesehen, dass auf der Montageplatte eine Nockenspur angeordnet ist, in die ein an dem mindestens einen Türflügel angebrachter Nocken eingreift. Die Nockenspur weist einen parallel zur Ausstellbewegung verlaufenden ersten Abschnitt auf, an den sich ein parallel zur Bewegung des mindestens einen Türflügels ausgerichteter zweiter Abschnitt anschließt, wobei der zweite Abschnitt sich an den ersten Abschnitt in Richtung der Ausstellbewegung des Schlittens anschließt. Dies vor folgendem Hintergrund: Wie bereits an anderer Stelle erläutert, ist das Moment zur Ausstellung des Schlittens größer als das Moment zur Verschiebung der vorzugsweise zwei Türflügel parallel zur Längsachse des Fahrzeugs zur Freigabe der Türöffnung. Richtig ist, dass die Verschiebung der Türflügel erst erfolgt, nachdem der Schlitten ausgefahren ist. Erst dann liegen die beiden Türflügel frei. Um nun zu verhindern, dass auf Grund des geringeren Moments bei der Verschiebung der Türflügel bei Antrieb des Riemen- oder Kettentriebes die Türflügel unmittelbar versucht werden auszustellen und nicht erst die Ausstellbewegung des Schlittens abgewartet wird, ist vorgesehen, dass die Seitwärtsbewegung der Türflügel durch die Nockenspur bis zum Abschluss der Ausstellbewegung des Schlittens blockiert ist. Erst nachdem der Nocken den Abschnitt in der Nockenspur, der parallel zur Ausstellbewegung des Schlittens verläuft, verlassen hat und in den Bereich des parallel zur Längsachse verlaufenden Abschnitts der Nockenspur gelangt, das heißt dann, wenn der Schlitten ausgestellt ist, wird durch den Antrieb die Verschiebebewegung der vorzugsweise zwei Türflügel parallel zur Längsachse des Fahrzeugs vorgenommen. Die Blockade der Tür in Geschlossenstellung wird demzufolge nicht nur durch die Kulisse in Verbindung mit dem Führungsglied bei Einsitzen im Fuß des Führungsgliedes vorgenommen, sondern im Wesentlichen auch durch die Ausbildung der Nockenspur mit dem Nocken, der schlussendlich über einen Steg mit dem mindestens einen Türflügel verbunden ist.

Anhand der Zeichnung wird die Erfindung nachstehend beispielhaft näher erläutert.
- Figur 1: zeigt eine perspektivische Darstellung des Ausstellschiebetürsystems in Geschlossenstellung;
- Figur 2: zeigt eine Darstellung gemäß Figur 1 bei ausgestelltem Schlitten und geöffneten Türflügeln;
- Figur 3: zeigt eine Ansicht von unten auf das Ausstellschiebetürsystem in Offenstellung;
- Figur 3a: zeigt eine Seitenansicht gemäß der Linie III a - III a aus Figur 3;
- Figur 4: zeigt eine Ansicht gemäß Figur 3 auf das Ausstellschiebetürsystem in Geschlossenstellung;
- Figur 4a: zeigt eine Ansicht der Linie IV a - IV a aus Figur 4;
- Figur 5: zeigt einen Teil des Riementriebs als Ersatzschaubild.

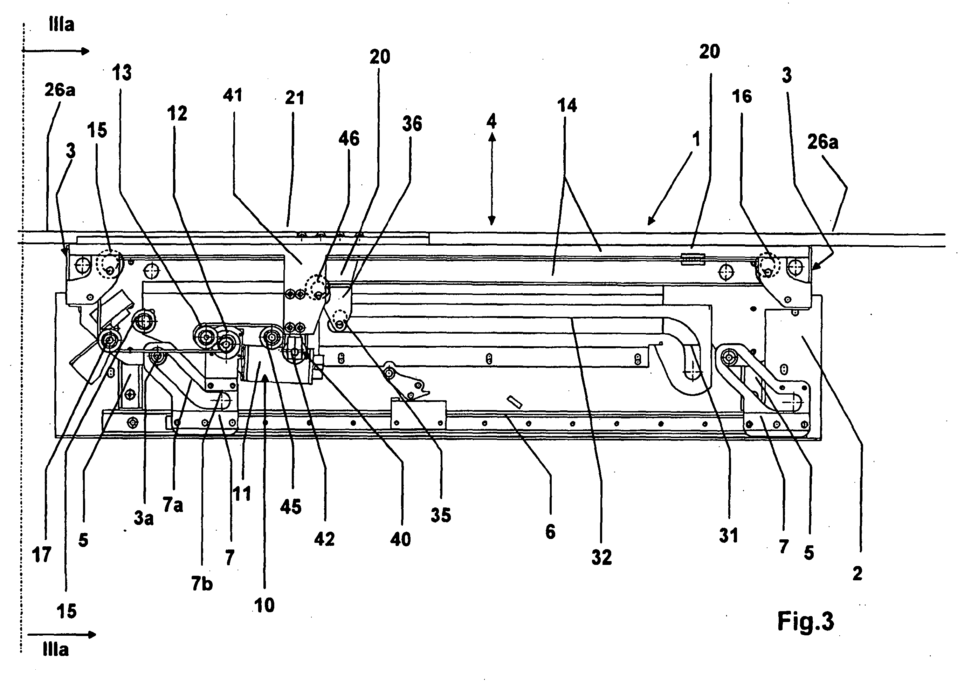

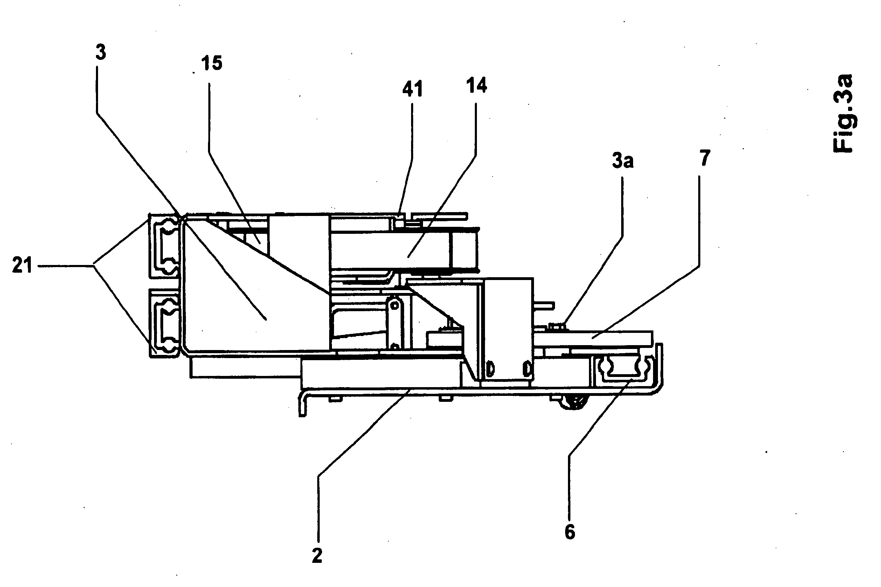

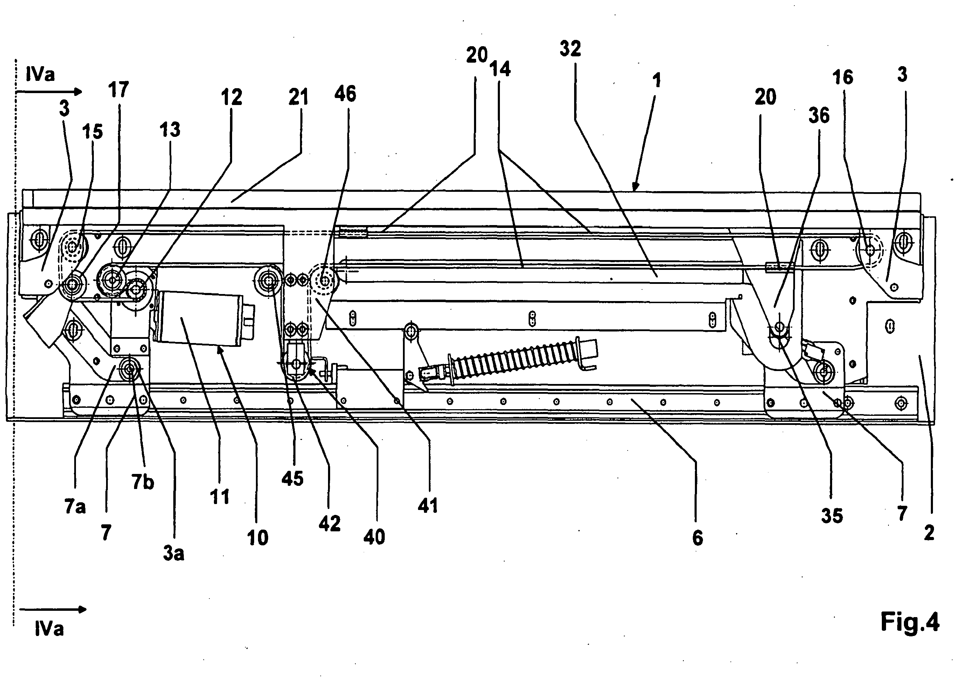

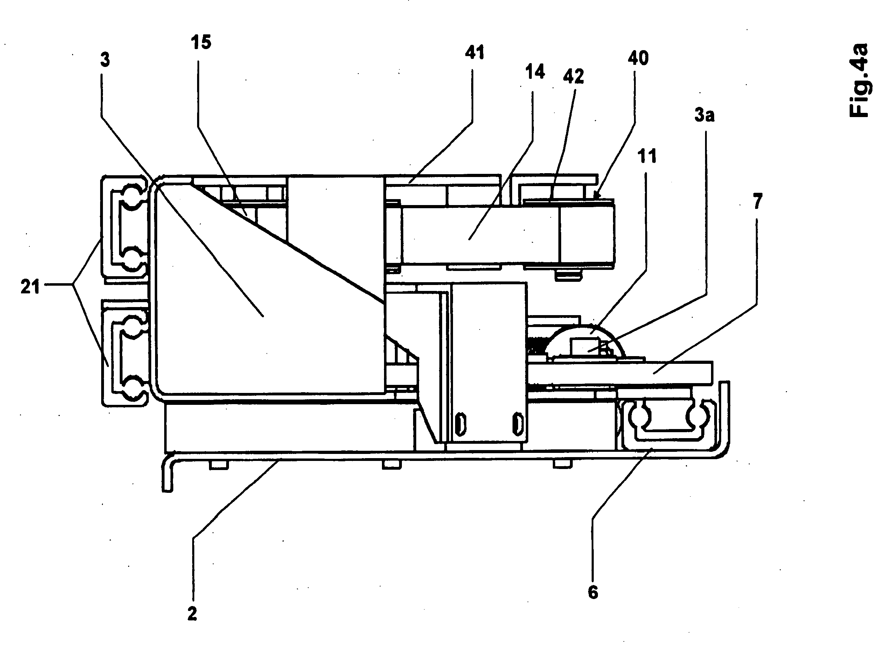

Das insgesamt mit 1 bezeichnete Ausstellschiebetürsystem besitzt eine Montageplatte 2, auf der der insgesamt mit 3 bezeichnete Schlitten in Richtung des Pfeils 4 verschieblich ist. Wie aus den Figuren 3 und 4 ersichtlich, besitzt die Montageplatte 2 zwei parallel zueinander verlaufende Führungsschienen 5, durch die der Schlitten 3 in Richtung der Ausstellbewegung gemäß Pfeil 4 nicht nur geführt ist, sondern auch gehalten ist; insofern ist die Schiene 5 nach Art einer Schwalbenschwanzführung ausgebildet.

Parallel zur Längsachse des Fahrzeugs, also quer zur Richtung der Ausstellbewegung des Schlittens, besitzt die Montageplatte 2 darüber hinaus eine weitere Schiene 6. Auf der Schiene 6 ist die mit 7 bezeichnete Kulisse entlang dem Pfeil 8 verschieblich angeordnet. Die Kulisse 7 besitzt einen in Richtung der Ausstellbewegung gemäß dem Pfeil 4 schräg verlaufenden Schlitz 7a, der endseitig einen sich parallel zur Längsachse des Fahrzeugs erstreckenden Fuß 7b aufweist. In Geschlossenstellung der Tür, das heißt bei eingefahrenem Schlitten, liegt das Führungsglied 3a des Schlittens 3 endseitig in dem Fuß 7b des Schlitzes 7a der Kulisse 7 ein. In diesem Zustand wirkt die Stellung des Führungsgliedes 3a in dem Fuß 7b nach Art einer Verriegelung für den Türflügel bzw. auch für die Ausstellbewegung des Schlittens.

An der Kulisse 7 befindet sich der insgesamt mit 10 bezeichnete Antrieb. Der Antrieb 10 umfasst den Motor 11 mit dem Ritzel 12 und der Andruckrolle 13. Durch die Andruckrolle 13 wird erreicht, dass der Riementrieb 14, der insbesondere als Zahnriementrieb ausgebildet ist, einen hohen Umschlingungswinkel auf dem Ritzel 12 erzeugt. Der Antrieb 10 ist, da er mit der Kulisse 7 verbunden ist, parallel zur Längsachse des Fahrzeugs beweglich. Wie bereits ausgeführt, treibt der Motor 11 des Antriebs 10 den Riementrieb 14 an. Der Riementrieb 14 ist zum Teil an dem Schlitten 3 gelagert. Hierzu weist der Schlitten 3 eine erste und eine zweite Spannrolle 15 und 16 auf, wobei dem Antrieb 10 vorgeschaltet eine weitere Umlenkrolle 17 vorgesehen ist, die für eine winkelförmige Umlenkung von der ersten Spannrolle 15 bis zum Ritzel 12 des Antriebs 10 sorgt.

Der Riementrieb 14 weist zwei Mitnehmer 20 auf, wobei die Mitnehmer 20 mit den Längsführungsmitteln 21 verbunden sind, die schlussendlich der Aufnahme der Türflügel dienen. Die Längsführungsmittel 21 stellen sich als schwalbenschwanzförmige ausgebildete Schienen dar, an denen die schematisch angedeuteten Türflügel 26a angelenkt sind.

Auf der Montageplatte 2 befindet sich darüber hinaus die insgesamt mit 30 bezeichnete Nockenspur. Die Nockenspur 30 besitzt zwei Abschnitte; ein erster Abschnitt 31 erstreckt sich in Richtung der Ausstellbewegung des Schlittens 3, wobei sich an diesen Abschnitt 31 ein Abschnitt 32 anschließt, der sich parallel zur Längsachse des Fahrzeugs erstreckt. In der Nockenspur 30 wird der Nocken 35 geführt, wobei der Nocken 35 durch einen Steg 36 mit dem mindestens einen Türflügel oder dem einen Längsführungsmittel 21 in Verbindung steht (Fig. 3).

Die Funktionsweise der Vorrichtung stellt sich nun wie folgt dar:

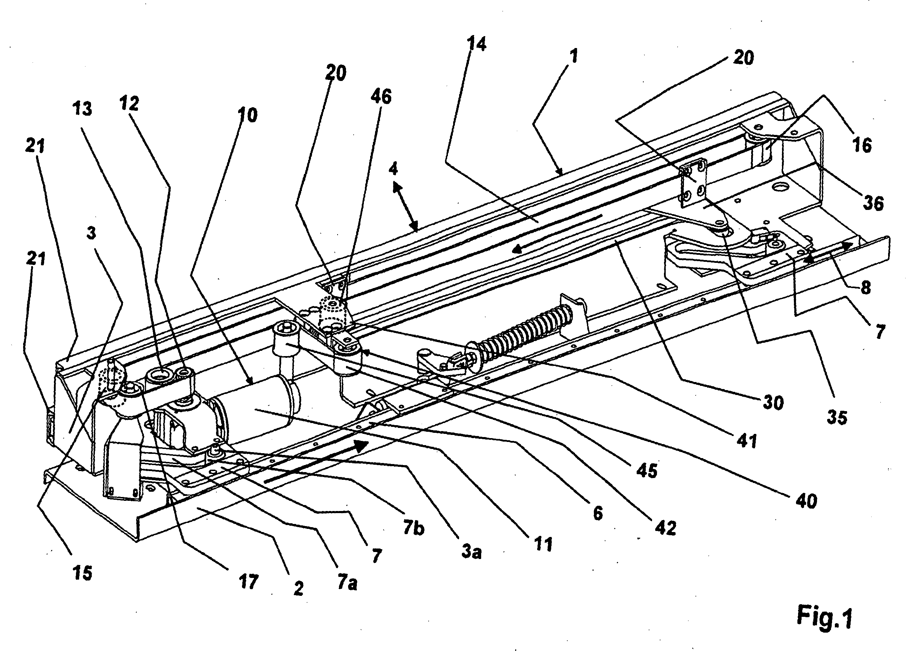

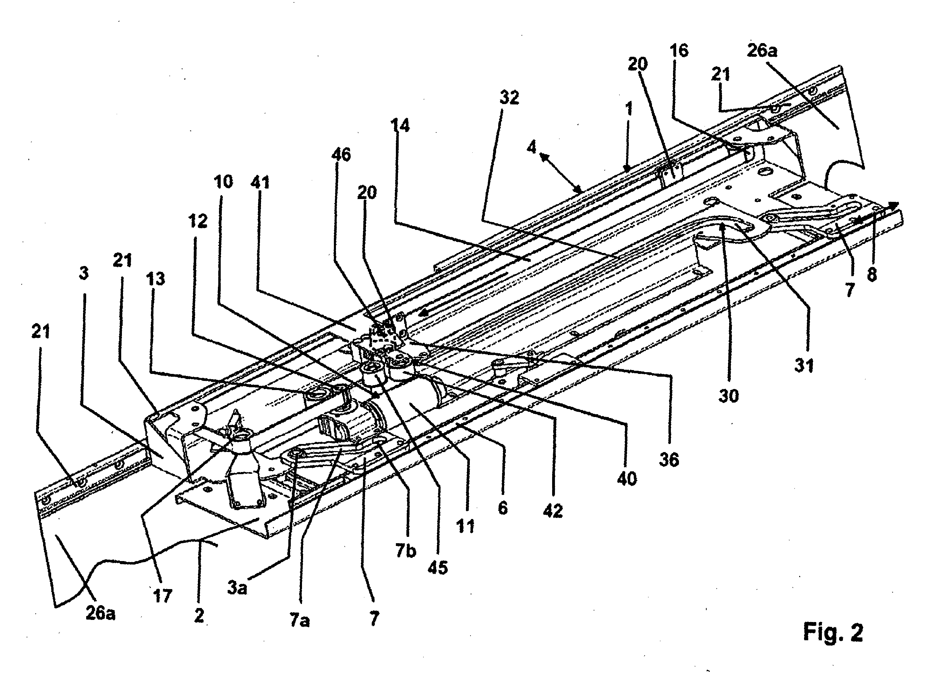

In der Ausgangsstellung gemäß Figur 1 befindet sich der insgesamt mit 3 bezeichnete Schlitten in Geschlossenstellung. Das heißt, dass das Führungsglied 3a in dem Fuß 7b des Schlitzes 7a der Kulisse 7 einsitzt. In dieser Stellung befindet sich der Nocken 35 in dem Abschnitt 31 der Nockenspur 30. Wird nun der Motor 11 aktiviert, wird der Riementrieb 14 in Bewegung gesetzt. Da der Riementrieb 14 die Türflügel nicht öffnen kann auf Grund der Tatsache, dass der Nocken 35 sich in dem Abschnitt 31 der Nockenspur 30 befindet, wird auf Grund des entstehenden Reaktionsmoments der Schlitten ausgefahren, wobei das Führungsglied 3a entlang dem Schlitz 7a der Kulisse 7 verläuft, bis das Führungsglied 3a die Stellung gemäß Figur 2 erreicht hat. In dem Moment ist der Führungsschlitten ausgestellt und die an den Längsführungsmitteln 21 angeordneten Türflügel können seitlich zur Freigabe der Türöffnung verfahren werden.

Wesentlicher Bestandteil der Erfindung ist nun die Anordnung einer insgesamt mit 40 bezeichneten Übersetzung. Die Übersetzung zeichnet sich zunächst durch einen Umlenkarm 41 aus, der sich parallel zur Ausstellbewegung des Schlittens erstreckt und der am Schlitten 3 angeordnet ist. Der Umlenkarm 41 zeigt endseitig die Druckrolle 42, um die der Riementrieb 14 geführt ist. Zu beiden Seiten des Umlenkarms 41 befinden sich eine erste Führungsrolle 45 und eine zweite Führungsrolle 46. Die Führungsrolle 46 ist am Umlenkarm 41 drehbar gelagert, wohingegen die Führungsrolle 45 auf der Montageplatte 2 ortsfest angeordnet ist. Das heißt, dass die Führungsrolle 46 mit dem Arm ausfährt, wohingegen die Druckrolle 42 bei Bewegung des Schlittens 3 sich relativ zu der ersten Führungsrolle 45 bewegt. Wie insbesondere aus Figur 2 erkennbar, wickelt sich hierbei der Riementrieb über diese Führungsrolle 45 ab. Die Länge des Riemens, der sich auf dieser Seite des Umlenkarms 41 abwickelt, entspricht der Länge des Riemens, um die sich der Riemen zwischen der Umlenkrolle 17 und der ersten Spannrolle 15 (Figur 2) verlängert. Wesentlich hierbei ist, dass - wie bereits ausgeführt - während der Ausstellbewegung des Schlittens die Türflügel selbst nicht verschieblich sind. Das heißt, dass die Mitnehmer 20 still stehen. Die Mitnehmer 20 befinden sich in Figur 1 und 2 rechts von dem Umlenkarm 41. Das bedeutet, dass eine Verschiebung des Riementriebes 40 während der Ausstellbewegung des Schlittens nur in dem Bereich zwischen dem Umlenkarm 41, und hier insbesondere der Druckrolle 42 und der ersten Spannrolle 15, erfolgt. Ansonsten bleibt - wie bereits erwähnt - der Riementrieb still. Während der Ausstellbewegung des Schlittens erfolgt - wie bereits an anderer Stelle erläutert - die Ausstellbewegung bei langsamerer Geschwindigkeit als die Verschiebung der Türflügel trotz gleicher Geschwindigkeit des Ritzels des Motors 11. Erklärbar ist dies wie folgt:

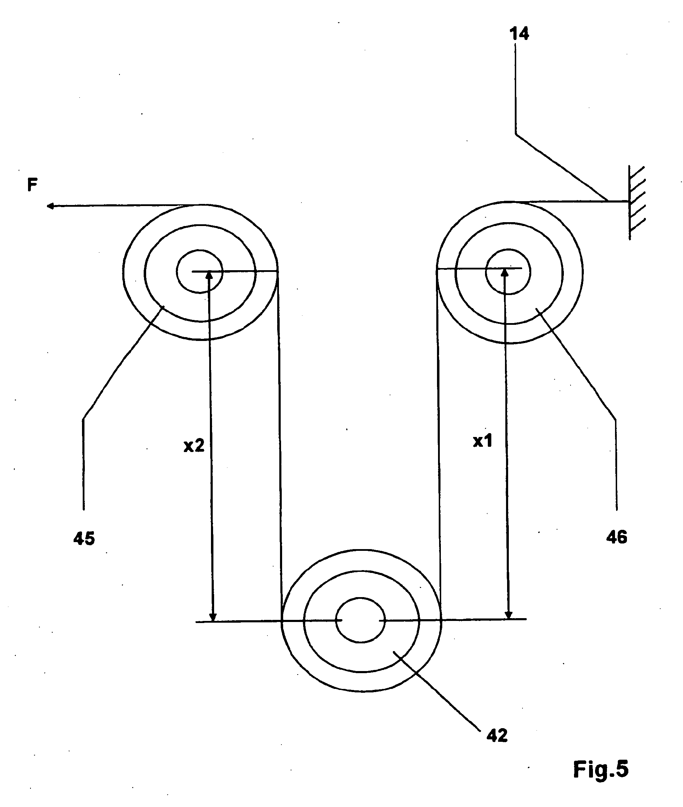

Da der Riementrieb 14 rechts von dem Umlenkarm still steht, stellt sich die Funktion des Riementriebes 14 im Bereich dieses Abschnittes zwischen Umlenkarm 41 und erster Spannrolle 15 nach Art eines Flaschenzuges dar, wie sich dies aus Figur 5 ergibt. An anderer Stelle wurde bereits erläutert, dass die Führungsrolle 46 am Umlenkarm 41 befestigt ist und daher mit dem Schlitten ausfährt. Das heißt, der Abstand X1 zwischen Umlenkrolle 46 und Druckrolle 42 bleibt immer gleich. Es verändert sich allerdings der Abstand X2 zwischen Druckrolle 42 und Führungsrolle 45. Dieser Abstand wird bei ausgefahrenem Schlitten nahezu null. Infolgedessen vermindert sich die Geschwindigkeit während des Ausfahrens des Schlittens 3, weil nur der Weg X2 von der Druckrolle durchfahren wird. Hierbei vergrößert sich aber die auf die Druckrolle wirkende Kraft für die Ausstellung des Schlittens. Nach Abschluss der Ausstellbewegung wird der komplette Riementrieb 14 in Bewegung gesetzt, das heißt, dass der Riementrieb an jeder Stelle die gleiche Geschwindigkeit hat.

Zum Einfahren des Schlittens ist die Vorgehensweise lediglich rückwärts zu betrachten; das heißt, dass nach dem Einziehen der Türflügel über die Längsführungsmittel 21 beim Einfahren des Schlittens 3 der Riementrieb 14 nur zwischen der Druckrolle 42 und der ersten Spannrolle 15 verschoben wird. Hierbei entsteht dann wieder nach dem Prinzip des Flaschenzuges die verminderte Geschwindigkeit bei Einzug des Schlittens bei erhöhter Kraft.

## Patentansprüche

1. Ausstellschiebetürsystem (1) für ein Fahrzeug, z. B. einen Bus oder ein Schienenfahrzeug, umfassend mindestens einen Türflügel (26a), wobei der mindestens eine Türflügel (26a) im geschlossenen Zustand außenhautbündig in der Türöffnung einsitzt, und wobei sich der eine Türflügel (26a) in Offenstellung außenseitig vor der Fahrzeugwandung befindet und in dieser Stellung die Türöffnung freigibt, wobei der mindestens eine Türflügel (26a) an einem Schlitten (3) angeordnet ist, wobei der Schlitten (3) Längsführungsmittel (21) für den mindestens einen Türflügel (26a) aufweist und wobei der Schlitten (3) in der Türöffnung im Kopfbereich durch eine Montageplatte (2) quer zur Fahrzeuglängsachse verschieblich aufnehmbar ist, wobei sowohl zum Antrieb des mindestens einen Türflügels (26a) als auch zur Verschiebung des Schlittens quer zur Fahrzeuglängsachse ein Antrieb (10) vorgesehen ist, wobei der Antrieb (10) einen Motor (11) und einen vom Motor angetriebenen Ketten- oder Riementrieb (14) umfasst,
**dadurch gekennzeichnet,**
**dass** der Riemen- oder Kettentrieb (14) eine Übersetzung (40) nach Art eines Flaschenzuges aufweist, wobei die Übersetzung derart ausgebildet ist, dass während der Ausstellbewegung des Schlittens (3) die Ausstellbewegung langsam aber bei hohem Moment erfolgt, wobei nach Abschluss der Ausstellbewegung die seitliche Bewegung des mindestens einen Türflügels (26a) schneller als die Ausstellbewegung, aber bei geringerem Moment erfolgt.

2. Ausstellschiebetürsystem nach Anspruch 1,
**dadurch gekennzeichnet,**
**dass** die Übersetzung (40) einen am Schlitten (3) angeordneten, sich parallel zur Richtung der Ausstellbewegung des Schlittens (3) erstreckenden Arm (41) mit endseitiger Druckrolle (42) für den Riemen- oder Kettentrieb (14) aufweist.

3. Ausstellschiebetürsystem nach einem oder mehreren der voranstehenden Ansprüche,
**dadurch gekennzeichnet,**
**dass** im Bereich des Arms (41) zu beiden Seiten des Arms (41) jeweils mindestens eine erste und zweite Führungsrolle (45, 46) für den Riemen- oder Kettentrieb (14) vorgesehenen ist.

4. Ausstellschiebetürsystem nach einem oder mehreren der voranstehenden Ansprüche,
**dadurch gekennzeichnet**,
die erste Führungsrolle (45), die zu dem Antrieb (10) benachbart liegt, auf der Montageplatte (2) angeordnet ist.

5. Ausstellschiebetürsystem nach einem oder mehreren der voranstehenden Ansprüche,
**dadurch gekennzeichnet,**
**dass** die zweite Führungsrolle (46) am Arm (41) befestigt ist.

6. Ausstellschiebetürsystem nach einem oder mehreren der voranstehenden Ansprüche,
**dadurch gekennzeichnet,**
**dass** zu beiden Enden des Schlittens (3) erste und zweite Spannrollen (15,16) für den Riemen- oder Kettentrieb (14) vorgesehen sind.

7. Ausstellschiebetürsystem nach einem oder mehreren der voranstehenden Ansprüche,
**dadurch gekennzeichnet,**
**dass** zwischen der einen ersten Spannrolle (15) und dem Antrieb (10) für den Riemen- oder Kettentrieb (14) eine Umlenkrolle (17) vorgesehen ist, wobei die Umlenkrolle (17) auf der Montageplatte (2) angeordnet ist.

8. Ausstellschiebetürsystem nach einem oder mehreren der voranstehenden Ansprüche,
**dadurch gekennzeichnet,**
**dass** der Antrieb (10) ein von einem Motor (11) angetriebenes Ritzel (12) umfasst, wobei eine Andruckrolle (13) zum Anpressen des Riemens oder der Kette des Riementriebs (14) an das Ritzel (12) vorgesehen ist.

9. Ausstellschiebetürsystem nach einem oder mehreren der voranstehenden Ansprüche,
**dadurch gekennzeichnet,**
**dass** auf der Montageplatte (2) mindestens eine Kulisse (7) zur Führung des Schlittens (3) während der Ausstellbewegung vorgesehen ist, wobei der Schlitten (3) ein Führungsglied (3a) zur Führung durch die Kulisse (7) aufweist.

10. Ausstellschiebetürsystem nach einem oder mehreren der voranstehenden Ansprüche,
**dadurch gekennzeichnet,**
**dass** die Kulisse (7) auf der Montageplatte (2) quer zur Richtung der Ausstellbewegung des Schlittens (3) verschieblich angeordnet ist.

11. Ausstellschiebetürsystem nach einem oder mehreren der voranstehenden Ansprüche,
**dadurch gekennzeichnet,**
**dass** die Kulisse (7) einen in Richtung der Ausstellbewegung des Schlittens (3) ausgerichteten schrägverlaufenden Schlitz (7a) aufweist, der endseitig einen parallel zur Richtung der Längsachse des Fahrzeugs ausgerichteten Fuß (7b) aufweist, wobei der Schlitz (7a) das Führungsglied (3a) des Schlittens (3) aufnimmt.

12. Ausstellschiebetürsystem nach einem oder mehreren der voranstehenden Ansprüche,
**dadurch gekennzeichnet**
**dass** die Kulisse (7) auf einer auf der Montageplatte (2) angeordneten Schiene (6) verschieblich angeordnet ist.

13. Ausstellschiebetürsystem nach einem oder mehreren der voranstehenden Ansprüche,
**dadurch gekennzeichnet**
**dass** der Antrieb (10) in Richtung der Fahrzeuglängsachse (Pfeil 8) verschieblich ist.

14. Ausstellschiebetürsystem nach einem oder mehreren der voranstehenden Ansprüche,
**dadurch gekennzeichnet**
**dass** der Antrieb (10) an der Kulisse (7) befestigt ist.

15. Ausstellschiebetürsystem nach einem oder mehreren der voranstehenden Ansprüche,
**dadurch gekennzeichnet**
**dass** der Ketten- oder Riementrieb (14) durch mindestens einen Mitnehmer (20) mit dem mindestens einen Türflügel (26a) in Verbindung steht.

16. Ausstellschiebetürsystem nach einem oder mehreren der voranstehenden Ansprüche,
**dadurch gekennzeichnet**
**dass** auf der Montageplatte (2) eine Nockenspur (30) angeordnet ist, in die ein an dem mindestens einen Türflügel (26a) angebrachter Nocken (35) eingreift.

17. Ausstellschiebetürsystem nach einem oder mehreren der voranstehenden Ansprüche,
**dadurch gekennzeichnet**
**dass** die Nockenspur (30) einen parallel zur Ausstellbewegung verlaufenden ersten Abschnitt (31) aufweist, an den sich ein parallel zur Bewegung des mindestens einen Türflügels (26a) ausgerichteter zweiter Abschnitt (32) anschließt.

18. Ausstellschiebetürsystem nach einem oder mehreren der voranstehenden Ansprüche,
**dadurch gekennzeichnet**
**dass** der zweite Abschnitt (32) sich an den ersten Abschnitt (31) in Richtung der Ausstellbewegung (Pfeil 4) des Schlittens (3) anschließt.

## Claims

1. A sliding plug door system (1) for a vehicle, such as a bus or a railbound vehicle, including at least one door wing (26a), said at least one door wing (26a) being seated in the door opening so as to be flush with the outer skin in the closed state, and the one door wing (26a) being located on the outer side in front of the vehicle wall in the open position, clearing the door opening in this position, the at least one door wing (26a) being disposed on a carriage (3), said carriage (3) comprising longitudinal guide means (21) for the at least one door wing (26a) and said carriage (3) being receivable in the door opening in the top part through a mounting plate (2) for sliding movement transverse to the longitudinal axis of the vehicle, a drive (10) being provided both for driving the at least one door wing (26a) and for sliding the carriage transverse to the longitudinal axis of the vehicle, said drive (10) including a motor (11) and a chain or belt drive (14) driven by said motor,
**characterized in**
**that** the belt or chain drive (14) comprises a transmission (40) in the form of a block and tackle, said transmission being configured such that during the outwards plugging movement of the carriage (3) the outwards plugging movement occurs slowly but at a high torque, with the lateral movement of the at least one door wing (26a) occurring faster than the outwards plugging movement, but at a lesser torque upon completion of the outwards plugging movement.

2. The sliding plug door system as set forth in claim 1,
**characterized in**
**that** the transmission (40) comprises an arm (41) with a pressure pulley (42) for the belt or chain drive (14) on its end side, said arm being disposed on the carriage (3) and extending parallel to the direction of the outwards plugging movement of the carriage (3).

3. The sliding plug door system as set forth in one or several of the afore mentioned claims,
**characterized in**
**that** at least one first and one second guide pulley (45, 46) for the belt or chain drive (14) is respectively provided in the region of the arm (41) on either side of said arm (41).

4. The sliding plug door system as set forth in one or several of the afore mentioned claims,
**characterized in**
**that** the first guide pulley (45), which is located in the neighbourhood of the drive (10), is disposed on the mounting plate (2).

5. The sliding plug door system as set forth in one or several of the afore mentioned claims,
**characterized in**
**that** the second guide pulley (46) is fastened to the arm (41).

6. The sliding plug door system as set forth in one or several of the afore mentioned claims,
**characterized in**
**that** first and second tension pulleys (15, 16) for the belt or chain drive (14) are provided on either end of the carriage (3).

7. The sliding plug door system as set forth in one or several of the afore mentioned claims,
**characterized in**
**that** a deflection pulley (17) is provided between the one first tension pulley (15) and the drive (10) for the belt or chain drive (14), said deflection pulley (17) being disposed on the mounting plate (2).

8. The sliding plug door system as set forth in one or several of the afore mentioned claims,
**characterized in**
**that** the drive (10) includes a pinion (12) driven by a motor (11), a pinch roller (13) for pressing the belt or the chain of the belt drive (14) against the pinion (12) being provided.

9. The sliding plug door system as set forth in one or several of the afore mentioned claims,
**characterized in**
**that** at least one slide (7) for guiding the carriage (3) during outwards plugging movement is provided on the mounting plate (2), said carriage (3) comprising a guide member (3a) for guidance through said slide (7).

10. The sliding plug door system as set forth in one or several of the afore mentioned claims,
**characterized in**
**that** the slide (7) is disposed on the mounting plate (2) for slidable movement transverse to the direction of the outwards plugging movement of the carriage (3).

11. The sliding plug door system as set forth in one or several of the afore mentioned claims,
**characterized in**
**that** the slide (7) comprises an inclined slot (7a) oriented in the direction of the outwards plugging movement of the carriage (3), said slot (7a) comprising at its end a foot (7b) oriented parallel to the direction of the longitudinal axis of the vehicle and receiving the guide member (3a) of the carriage (3).

12. The sliding plug door system as set forth in one or several of the afore mentioned claims,
**characterized in**
**that** the slide (7) is slidably disposed on a rail (6) disposed on the mounting plate (2).

13. The sliding plug door system as set forth in one or several of the afore mentioned claims,
**characterized in**
**that** the drive (10) is slidable in the direction of the longitudinal axis of the vehicle (arrow 8).

14. The sliding plug door system as set forth in one or several of the afore mentioned claims,
**characterized in**
**that** the drive (10) is fastened to the slide (7).

15. The sliding plug door system as set forth in one or several of the afore mentioned claims,
**characterized in**
**that** the chain or belt drive (14) is connected to the at least one door wing (26a) through at least one driver (20).

16. The sliding plug door system as set forth in one or several of the afore mentioned claims,
**characterized in**
**that** on the mounting plate (2) there is disposed a cam track (30) for a cam (35) mounted to the at least one door wing (26a) to engage therein.

17. The sliding plug door system as set forth in one or several of the afore mentioned claims,
**characterized in**
**that** the cam track (30) comprises a first portion (31) extending parallel to the outwards plugging movement, said first portion being adjoined with a second portion (32) oriented parallel to the movement of the at least one door wing (26a).

18. The sliding plug door system as set forth in one or several of the afore mentioned claims,
**characterized in**
**that** the first portion (31) is adjoined with the second portion (32) in the direction of the outwards plugging movement (arrow 4) of the carriage (3).

## Revendications

1. Système de porte louvoyante (1) pour un véhicule, p. ex. un bus ou un véhicule ferroviaire, comprenant au moins un battant de porte (26a), l'au moins un battant de porte (26a) étant logé dans la baie de la porte de manière à affleurer la paroi externe à l'état fermé, l'un battant de porte (26a) se situant sur la face externe devant la paroi du véhicule en position ouverte et libérant la baie de la porte dans cette position, l'au moins un battant de porte (26a) étant disposé sur un chariot (3), ce chariot (3) comportant des moyens (21) de guidage longitudinal pour l'au moins un battant de porte (26a) et le chariot (3) étant apte à être reçu, mobile en coulissement en travers de l'axe longitudinal du véhicule, dans la baie de la porte en partie haute par une plaque de montage (2), un entraînement (10) étant prévu tant pour l'entraînement de l'au moins un battant de porte (26a) que pour le coulissement du chariot en travers de l'axe longitudinal du véhicule, l'entraînement (10) comprenant un moteur (11) et un entraînement par chaîne ou par courroie (14) entraîné par le moteur,
**caractérisé en ce**
**que** l'entraînement par chaîne ou par courroie (14) comporte un système multiplicateur (40) sous forme de palan, ce système multiplicateur étant conformé de telle sorte que lors du mouvement louvoyant du chariot (3) le mouvement louvoyant se déroule lentement mais avec un couple élevé, tandis qu'une fois le mouvement louvoyant effectué, le mouvement latéral de l'au moins un battant de porte (26a) se déroule plus rapidement mais à couple moins élevé que le mouvement louvoyant.

2. Système de porte louvoyante selon la revendication 1,
**caractérisé en ce**
**que** le système multiplicateur (40) comporte un bras (41) disposé sur le chariot (3), qui s'étend parallèlement à la direction de mouvement louvoyant du chariot (3) et qui comporte à son extrémité un rouleau presseur (46) pour l'entraînement par chaîne ou par courroie (14).

3. Système de porte louvoyante selon une ou plusieurs des revendications précédentes,
**caractérisé en ce**
**qu'**à la hauteur du bras (41) sont prévues de part et d'autre du bras (41) au moins une première et une deuxième poulie de guidage (45, 46) pour l'entraînement par chaîne ou par courroie (14).

4. Système de porte louvoyante selon une ou plusieurs des revendications précédentes,
**caractérisé en ce**
**que** la première poulie de guidage (45), qui est voisine de l'entraînement (10), est disposée sur la plaque de montage (2).

5. Système de porte louvoyante selon une ou plusieurs des revendications précédentes,
**caractérisé en ce**
**que** la deuxième poulie de guidage (46) est fixée au bras (41).

6. Système de porte louvoyante selon une ou plusieurs des revendications précédentes,
**caractérisé en ce**
**que** des premiers et des deuxièmes enrouleurs (15, 16) pour l'entraînement par chaîne ou par courroie (14) sont prévus à chaque extrémité du chariot (3).

7. Système de porte louvoyante selon une ou plusieurs des revendications précédentes,
**caractérisé en ce**
**qu'**une poulie de renvoi (17) est prévue entre l'un des premiers enrouleurs (15) et l'entraînement (10) pour l'entraînement par chaîne ou par courroie (14), la poulie de renvoi (17) étant disposée sur la plaque de montage (2).

8. Système de porte louvoyante selon une ou plusieurs des revendications précédentes,
**caractérisé en ce**
**que** l'entraînement (10) comprend un pignon (12) entraîné par un moteur (11), un galet presseur (13) destiné à plaquer la courroie ou la chaîne de l'entraînement par courroie (14) contre le pignon (12) étant prévu.

9. Système de porte louvoyante selon une ou plusieurs des revendications précédentes,
**caractérisé en ce**
**qu'**au moins une coulisse (7) de guidage du chariot (3) pendant le mouvement louvoyant est prévue sur la plaque de montage (2), le chariot (3) comportant un membre de guidage (3a) destiné au guidage par la coulisse (7).

10. Système de porte louvoyante selon une ou plusieurs des revendications précédentes,
**caractérisé en ce**
**que** la coulisse (7) est disposée, mobile en coulissement en travers de la direction du mouvement louvoyant du chariot (3), sur la plaque de montage (2).

11. Système de porte louvoyante selon une ou plusieurs des revendications précédentes,
**caractérisé en ce**
**que** la coulisse (7) comporte une fente (7a) oblique orientée suivant la direction du mouvement louvoyant du chariot (3), cette fente (7a) comportant à son extrémité un pied (7b) orienté parallèlement à la direction de l'axe longitudinal du véhicule et recevant le membre de guidage (3a) du chariot (3).

12. Système de porte louvoyante selon une ou plusieurs des revendications précédentes,
**caractérisé en ce**
**que** la coulisse (7) est disposée mobile en coulissement sur un rail (6) disposé sur la plaque de montage (2).

13. Système de porte louvoyante selon une ou plusieurs des revendications précédentes,
**caractérisé en ce**
**que** l'entraînement (10) est mobile en coulissement dans la direction de l'axe longitudinal du véhicule (flèche 8).

14. Système de porte louvoyante selon une ou plusieurs des revendications précédentes,
**caractérisé en ce**
**que** l'entraînement (10) est fixé sur la coulisse (7).

15. Système de porte louvoyante selon une ou plusieurs des revendications précédentes,
**caractérisé en ce**
**que** l'entraînement par chaîne ou par courroie (14) est relié à l'au moins un battant de porte (26a) par l'intermédiaire d'au moins un entraîneur (21).

16. Système de porte louvoyante selon une ou plusieurs des revendications précédentes,
**caractérisé en ce**
**que**, sur la plaque de montage (2), est disposée une piste (30) pour un bossage dans laquelle s'engage un bossage (35) monté sur l'au moins un battant de porte (26a).

17. Système de porte louvoyante selon une ou plusieurs des revendications précédentes,
**caractérisé en ce**
**que** la piste (30) pour un bossage comporte un premier tronçon (31) qui s'étend parallèlement au mouvement louvoyant et que vient prolonger un deuxième tronçon (32) orienté parallèlement au mouvement de l'au moins un battant de porte (26a).

18. Système de porte louvoyante selon une ou plusieurs des revendications précédentes,
**caractérisé en ce**
**que** le deuxième tronçon (32) prolonge le premier tronçon (31) suivant la direction du mouvement louvoyant (flèche 4) du chariot (3).
